# EUROPEAN PATENT APPLICATION

(11) **EP 3 076 010 A1**
(43) Date of publication of application: **05.10.2016**
(21) Application number: 13898454.7
(22) Date of filing: 31.12.2013
(51) Int. Cl.: F03B 17/06

(54) **MULTI-VANE-TYPE FLUID POWER APPARATUS**

(30) Priority: 27.11.2013 CN 201310636480
(71) Applicant: Tso, Hung Fai, Henry, Hong Kong (CN)
(72) Inventor: Tso, Hung Fai, Henry, Hong Kong (CN)
(74) Representative: Patent- und Rechtsanwälte Dr. Solf & Zapf
(86) International application number: PCT/CN2013/091005
(87) International publication number: WO 2015/078086

(57) **Abstract**

Disclosed is a multi-vane-type flow kinetic energy device placed in the atmosphere with an air current or in a body of water with a water current, and comprising: a wheel shaft (2); and multiple wheel vanes (1) fixed on the wheel shaft (2) along an axial direction of the wheel shaft (2), the multiple wheel vanes (1) being uniformly distributed on the wheel shaft (2) and in a radiating arrangement, and the wheel vanes (1) driving the wheel shaft (2) to rotate unidirectionally under the effect of fluid power of the water current or air current, wherein the wheel vanes (1) comprise a wheel vane frame (7) and multiple windows (4) formed in the wheel vane frame (7), window vanes (3) are provided on the windows (4) to cover the windows (4) in a forward flow region (11) and to automatically open the windows (4) in a counter-flow region, and all the window vanes (3) are placed on the same side of the wheel vanes (1). The multi-vane-type flow kinetic energy device has the advantages of having a simple structure, being convenient to manufacture, and being low in costs, and can be popularized and applied to rivers and seas in various places globally and places with wind.

## Description

### Technical Field

The present invention relates to a power apparatus, particularly to a multi-vane-type flow kinetic energy device.

### Background

Since the industrial revolution, the world has been going gradually into an era with the manual power being replaced by mechanical power, and as for the energy sources, the chemical energy source becomes dominant instead of the physical energy source. By using coal, petroleum and other organic matter as fuel, energy is produced through combustion. And during the combustion of the fuel, handful material is released and mixed into the air, resulting in pollution to the environment. Additionally, in order to obtain more fuel to produce more energy, human beings are going to exploit it further excessively, and this worsens the pollution to the environment and leads to the greenhouse effect, and then imperils the future of mankind. Therefore, men of insight propose to use renewable energy sources, such as wind power, water power, and tidal energy and so on, so as to reduce the application of chemical energy sources.

### Summary

The technical problem to be solved by the present invention is to provide a multi-vane-type flow kinetic energy device that is of simple structure, low cost and can output power continuously by taking advantage of the fluid power.

In order to solve the technical problem mentioned above, the present invention adopts the following technical solution:
a multi-vane-type flow kinetic energy device, placed in the atmosphere with an air current or in a body of water with a water current, comprising:
   a wheel shaft;
   multiple wheel vanes, fixed on the wheel shaft along an axial direction of the wheel shaft, the multiple wheel vanes being uniformly distributed on the wheel shaft and in a radiating arrangement, and the wheel vanes driving the wheel shaft to rotate unidirectionally under the effect of fluid power of the water current or the air current; wherein
   the wheel vanes comprise a wheel vane frame and multiple windows formed in the wheel vane frame, and the window vanes are provided on the windows to cover the windows in a forward flow region and to automatically open the windows in a counter-flow region, and all of the window vanes are placed on the same side of the wheel vanes.

Preferably, the window is formed by crossing transverse rod-shape bodies and longitudinal rod-shape bodies perpendicular to each other, wherein the transverse rod-shape body is parallel to the wheel shaft, and spaces of two adjacent transverse rod-shape bodies are equal, while spaces of two adjacent longitudinal rod-shape bodies are equal.

Preferably, when the wheel shaft is disposed horizontally in use, the window vane is rotatably connected on the outer edge of the window parallel to the wheel shaft, and when the wheel shaft is disposed vertically in use, the window vane is rotatably connected on the outer edge of the window parallel to the wheel shaft or the window vane is rotatably connected on the upper edge of the window perpendicular to wheel shaft.

Preferably, the window vane is hinge-joined to the outer edge or the upper edge of the window by a hinge.

Preferably, a mortise is provided on the outer edge or the upper edge of the window, while a tenon, which is protruding and used for inserting into the mortise so that the window vane is rotatably connected on the window, is provided on the window vane.

Preferably, a shaft lever is provided on the outer edge or the upper edge of the window, and a window vane hole into which the shaft lever penetrates is provided on the window vane, so that the window vane is rotatably connected on the window.

Preferably, the area of the window vane is larger than the area of the corresponding window, resulting in that it is sufficient for the window vane to fully cover the corresponding window, and the adjacent window vanes do not overlap each other.

Preferably, the area of the window vane is smaller than or equal to the area of the corresponding window, and a stopping bar is provided on the edge of the window, which is used to make the window vanes always stay at the same side of the window without rotating to the other side of the window.

Preferably, one face of the window vane recesses inwardly while the other face protrudes outwardly, and the face recessing inwardly adheres to the wheel vane frame, while the face protruding outwardly faces away from the wheel vane frame.

Compared with the prior art, the beneficial advantages of the multi-vane-type flow kinetic energy device of the present invention lie in:
1. The multi-vane-type flow kinetic energy device of the present invention, by taking advantage of the window vane on the wheel vane in the forward flow region automatically covering so as to close the window of the wheel vane and the window vane on the wheel vane in the counter-flow region automatically opening so as to open the window of the wheel vane, retains the windows on half of the wheel vanes in an opened state when the half of the wheel vanes rotate facing the fluid flowing direction, thereby significantly lowering the resistance to the fluid flow, and at the same time, retains the windows on half of the wheel vanes in a closed state, rotating continuously due to the driving of the fluid power, and further driving the wheel shaft to rotate, and thus, the rotating wheel shaft can output power continuously.
2. When the multi-vane-type flow kinetic energy device of the present invention is placed in the atmosphere at a location with air flowing, the effect to generate electricity by wind power is more prominent, since the windage area of the wheel vane can be enlarged as compared to the conventional wind turbine.
3. The multi-vane-type flow kinetic energy device of the present invention can entirely hide in the water when it is in use, thus this only leads to slight harm done to the natural environment and the ecological environment and also leads to little influence on the boat navigation channel. At the same time, when the multi-vane-type flow kinetic energy device is placed in rivers and seas, there is relatively small limitation by the environment, and it is possible to construct relatively large volume so as to obtain relatively large output power.
4. Because the multi-vane-type flow kinetic energy device of the present invention uses wind power or water flow power, which are both physical energy sources, it has the advantages of permanent existence, significant power, inexhaustible, and no pollution to the environment.
5. The multi-vane-type flow kinetic energy device of the present invention is of simple structure, easy to manufacture and low cost, and can be popularized and applied all over the world.

### Brief Description of Drawings

Fig. 1 is a cross-sectional, illustrative view of the multi-vane-type flow kinetic energy device of the present invention when the wheel shaft is placed horizontally;
Fig. 2 is a front, structural, illustrative view of one wheel vane of the multi-vane-type flow kinetic energy device of the present invention when the wheel shaft is placed horizontally:
Fig. 3 is a front, structural, illustrative view of the joggle of the window and the window vane of the multi-vane-type flow kinetic energy device of the present invention;
Fig. 4 is a side view of the window vane in Fig. 3 in the state in which the window is closed;
Fig. 5 is a side view of the window vane in Fig. 3 in the state of being opened due to the propulsion of the fluid;
Fig. 6 is a front, structural, illustrative view of the hinge-joint of the window and the window vane of the multi-vane-type flow kinetic energy device of the present invention;
Fig. 7 is a side view of the window vane in Fig. 6 in the state in which the window is closed;
Fig. 8 is a side view of the window vane in Fig. 6 in the state of being opened due to the propulsion of the fluid;
Fig. 9 is a front, structural, illustrative view of another type of connection of the window and the window vane of the multi-vane-type flow kinetic energy device of the present invention;
Fig. 10 is a side view of the window vane in Fig. 9 in the state in which the window is closed;
Fig. 11 is a side view of the window vane in Fig. 9 in the state of being opened due to the propulsion of the fluid;
Fig. 12 is a top, structural, illustrative view of the multi-vane-type flow kinetic energy device of the present invention when the wheel shaft is placed with the axial direction vertical in a second way;
Fig. 13 is a front, structural, illustrative view of one wheel vane of the multi-vane-type flow kinetic energy device of the present invention when the wheel shaft is placed with the axial direction vertical in a second way;
Fig. 14 is an illustrative view of the working state of the multi-vane-type flow kinetic energy device of the present invention when the wheel shaft is placed with the axial direction horizontal;
Fig. 15 is an illustrative view of another working state of the multi-vane-type flow kinetic energy device of the present invention when the wheel shaft is placed with the axial direction horizontal.

**Description of the reference signs**

| | |
|---|---|
| 1-wheel vane | 2-wheel shaft |
| 3- window vane | 4- window |
| 5- window outer edge | 6-wheel shaft axial line |
| 7-wheel vane frame | 8- tenon |
| 9- mortise | 10-hinge |
| 11- forward flow region | 12- counter-flow region |
| 13- turning surface | 14- median plane |
| 15-stopping bar | 16-shaft lever |
| 17- window vane hole | 18- window upper edge |

### Detailed Description of Embodiments

The present invention will be further described in detail by incorporating the accompanied drawings and the specific embodiment, but doesn't serve as a limitation to the present invention.

Firstly, it is necessary to note that, the turning surface mentioned hereinafter refers to the plane parallel to the fluid flowing direction and passing through the wheel shaft axial line when the wheel shaft is disposed horizontally in the atmosphere or water. The turning surface divides the space into two regions: a forward flow region in which the wheel vane rotates along the fluid flowing direction; a counter-flow region in which the wheel vane rotates against the fluid flowing direction. A median plane refers to the plane perpendicular to the fluid flowing direction and passing through the wheel shaft axial line.

The multi-vane-type flow kinetic energy device provided in the present invention is placed in the atmosphere with an air current or a body of water with a water current, and the window vane on the wheel vane in the forward flow region covers the corresponding window naturally due to the effect of the fluid propulsion while the window vane on the wheel vane in the counter-flow region opens the corresponding window naturally due to the effect of the fluid propulsion, so that the wheel vane drives the wheel shaft to rotate under the fluid flowing effect, in order to output power continuously.

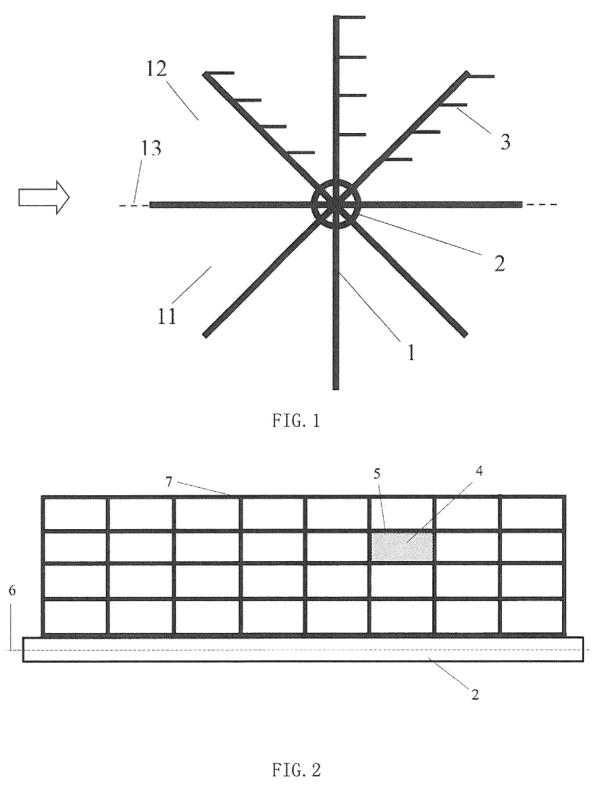

Specifically, as shown in Fig. 1 and Fig. 2, a multi-vane-type flow kinetic energy device disclosed in the present invention includes a wheel shaft 2 and multiple wheel vanes 1, whereas the wheel vanes 1 are fixed on the wheel shaft 2 along the axial direction of the wheel shaft 2, and the multiple wheel vanes 1 are uniformly distributed on the wheel shaft 2 and in a radiating arrangement. The rotation of the wheel vanes 1 will drive the wheel shaft 2 to rotate unidirectionally under the fluid power effect of the water current or the air current.

The wheel vane 1 is constituted of a wheel vane frame 7 as shown in Fig. 2, and multiple hollow and unblocked windows 4 are formed in the wheel vane frame 7. In the present embodiment, the windows 4 are formed by the spacing of transversely and longitudinally crossing rod-shape bodies. A window vane 3 is provided on each window 4 to cover the window 4 in the forward flow region 11 and to automatically open the window 4 in the counter-flow region 12, and all of the window vanes 3 are placed on the same side of the wheel vane 1. As shown in Fig. 2, the wheel vane frame 7 disclosed in the present embodiment is rectangular, and each of the windows 4 is also rectangular, while rectangular windows are the most economical to manufacture and the manufacturing efficiency is the highest. Besides, the longer side of the rectangular window is made to be parallel to the wheel shaft axial line 6, and in this way, it is easier for the window vane 3 hinge-joined to the window outer edge 5 to open. Practically, the wheel vane frame 7 and the window 4 in the present invention are not limited to these forms, for example, the structure of the wheel vane frame 7 is a curvilinear shape or a fan shape, and the shape of the window 4 can also be an arc shape or other shapes, as long as the wheel vanes 1 can drive the wheel shaft 2 to rotate continuously and unidirectionally under the propulsion of the fluid. At this time, the window vane 3 should vary according to the variation of the shape of the window 4, but the directions in which the window vane 3 opens and covers are unchanged.

Additionally, in the present embodiment shown in Fig.2, it is only an illustrative example that four windows 4 are provided on each of the wheel vanes 1 along the radial direction of the wheel shaft 2, but practically, the number of the radial window vanes 3 can be determined according to the practical requirement without any limitation. Moreover, the number of the windows 4 provided on each of the wheel vanes 1 along the direction of the wheel shaft axial line 6 is not limited to eight, but can be determined according to the practical requirement. For the sake of clarity, only the window 4 is shown in Fig. 2 but the window vane 3 is not, and in Fig. 2, one of the window spaces is indicated by dark color.

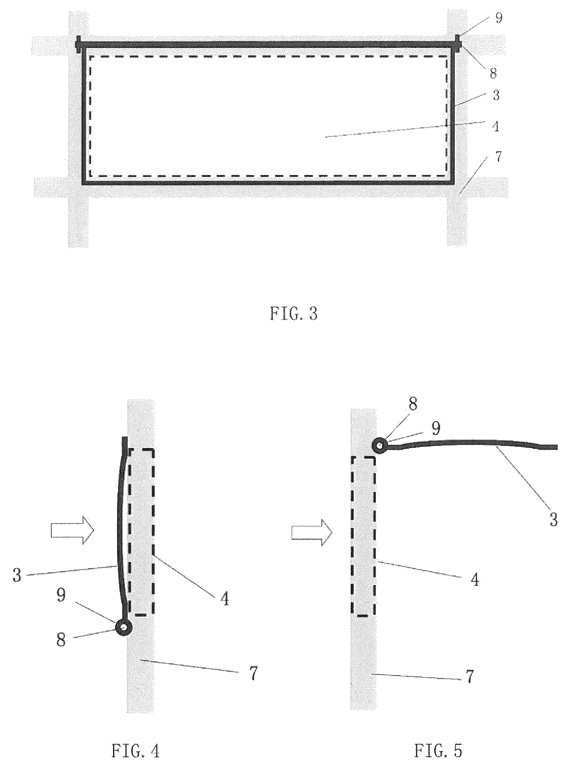

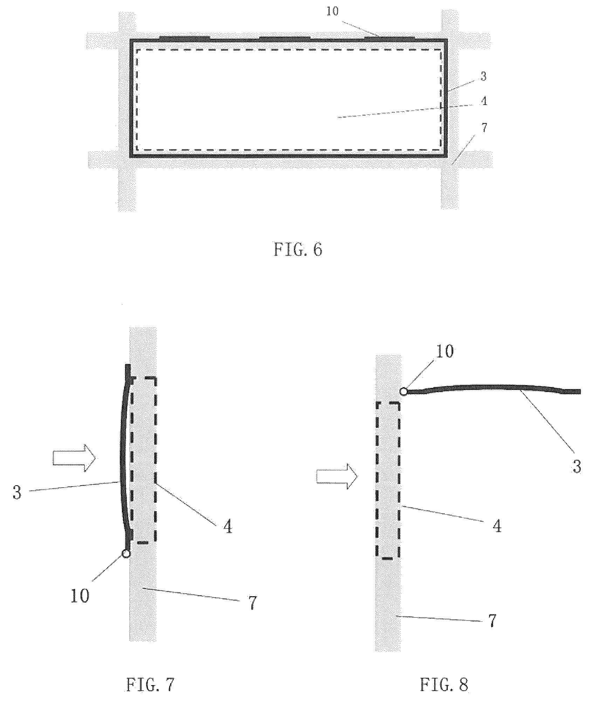

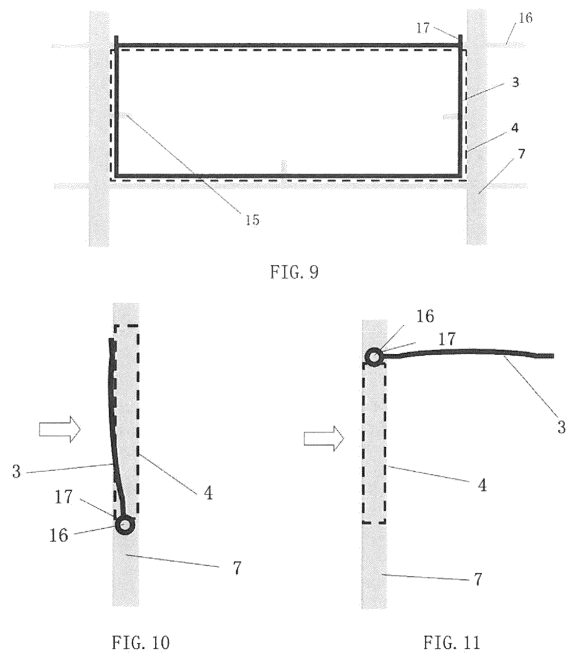

In order to realize that the window vane 3 is rotatably connected on the window 4, so that the window vane 3 covers the window 4 in the forward flow region 11 and opens the window 4 in the counter-flow region 12 under the propulsion of the fluid, the window vane 3 can be rotatably connected in various ways. As shown in Fig. 3 to Fig. 5, a mortise 9 is provided on the edge (that is, the edge parallel to the wheel shaft 2 in this embodiment, and hereinafter, simply referred as a window outer edge 5) of the window 4 far away from the wheel shaft 2. A tenon 8, which is protruding and used for being inserted into the mortise 9 so that the window vane 3 is rotatably connected on the window 4, is provided on the window vane 3. As shown in Fig. 6 to Fig. 8, the window vane 3 can also be hinge-joined to the window outer edge 5 by a hinge 10. The rotatable connection of the window vane can also be realized in the way as shown in Fig. 9 to Fig. 11. A shaft lever 16 is provided on the window outer edge 5, and a window vane hole 17 into which the shaft lever 16 penetrates is provided on the window vane 3, so that the window vane 3 is rotatably connected on the window outer edge 5. If the window outer edge 5 itself is a round-rod shape, then, the additional shaft lever can be removed, and the window outer edge 5 can be made to pass through the window vane hole 17 directly, so that the window vane 3 is rotatably connected on the window outer edge 5.

With continued reference to Figs.3-8, in order to make the window vane 3 cover the window 4 so that the fluid propulsion force subjected by the wheel vane increases in the forward flow region 11, in the present embodiment, the area of the window vane 3 is slightly larger than the area of the corresponding window 4, resulting in that it is sufficient for the window vane 3 to fully cover the corresponding window 4, and the adjacent window vanes 3 should not overlap each other in order to ensure that their actions do not affect each other.

Certainly, it is also possible if the area of the window vane 3 is not larger than the area of the window 4, and as shown in Fig. 9 to Fig. 11, the area of the window vane 3 is slightly smaller than or equal to the area of the corresponding window 4. A stopping bar 15 is provided on an edge of the window 4, which is used to make the window vane 3 always stay at the same side of the window 4 without rotating to the other side of the window 4. The function of the stopping bar 15 is mainly to press the wheel vane frame 7 when the window vane 3 is subjected to the action force of the fluid in the forward flow region 11, due to the existence of the stopping bar 15, the action force of the fluid subjected by the window vane 3 is transmitted to the wheel vane frame 7 through the stopping bar 15, so as to drive the wheel shaft 2 to rotate. The stopping bar 15 can be provided in various ways and is not limited to the case of short and small bar shape shown in Fig. 9, for example, the stopping bar 15 can be provided as a long bar shape passing through the whole window 4, and the bar shape can be either horizontal or vertical, but of course, it can be slanted. Moreover, a plurality of stopping bars 15 can be provided. Additionally, the stopping bar 15 can also be a multiple grid shape structure formed in the window 4.

As shown in Figs. 4, 5, 7, 8, 10 and 11, the window vane 3 in the present embodiment is non-planar but with certain radian, that is, one side face of the window vane 3 recesses inwardly toward the other side face, and correspondingly, the other side face protrudes outwardly, whereas the face recessing inwardly adheres to the wheel vane frame 7, and the face protruding outwardly faces away from the wheel vane frame 7. The aim of thus provision is to make the window vane 3 in the forward flow region 11 adhere to the window 4 better, and accordingly increase the propulsion force acted on the window vane 3 by the fluid. Certainly, it is also possible if the window vane 3 is provided to be flat without a radian, and the window vane 3 will also open the window 4 in the counter-flow region 12 and close the window 4 in the forward flow region 11 under the propulsion effect of the fluid.

Additionally, with continued reference to Fig. 2, the window 4 in the present embodiment is formed by crossing transverse rod-shape bodies and longitudinal rod-shape bodies perpendicular to each other, wherein spaces of two adjacent transverse rod-shape bodies are equal, and spaces of two adjacent longitudinal rod-shape bodies are equal, so that the sizes and shapes of the formed windows 4 are completely the same, but practically, the sizes and shapes of the windows 4 can be different. Moreover, it is shown in the present embodiment that each window 4 is rotatably connected with one window vane 3 respectively, but practically, two or more windows 4 can use one common window vane 3. Or it is also possible that one window 4 can be provided with two or more window vanes 3. However, it has to be ensured that the window vane 3 always stays on the same side of the window 4 without rotating to the other side of the window 4 during rotation. When multiple windows 4 use one common window vane 3, the frame between the adjacent two windows 4 functions as a stopping bar 15.

When in use, the multi-vane-type flow kinetic energy device of the present invention can be disposed horizontally according to the axial direction of the wheel shaft (as shown in Fig. 1 to Fig. 2), or can be disposed vertically according to the axial direction of the wheel shaft (not shown in the figures).The structure of the multi-vane-type flow kinetic energy device is the same no matter it is disposed horizontally or disposed vertically, moreover, the working principles are also the same, and the window vane 3 is hinge-joined to the window outer edge 5. When the multi-vane-type flow kinetic energy device of the present invention is placed in the fluid, such as the atmosphere with an air current or a body of water with a water current, the fluid flowing direction crosses with the wheel shaft axial line so as to form a turning surface 13, wherein the turning surface 13 divides the space into the forward flow region 11 and the counter-flow region 12. The window vane 3 on the wheel vane 1 covers the window 4 due to the effect of the fluid propulsion in the forward flow region 11, and the window vane 3 on the wheel vane I opens the window 4 due to the effect of the fluid propulsion in the counter-flow region 12, so that the resistance is reduced when the wheel vane 1 in the counter-flow region 12 rotates reversely, and at the same time, the wheel vane 1 in the forward flow region 11 drives the wheel shaft to rotate under the fluid flowing effect, in order to output power continuously.

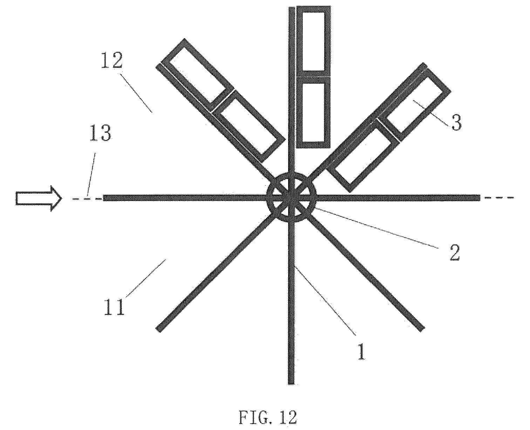

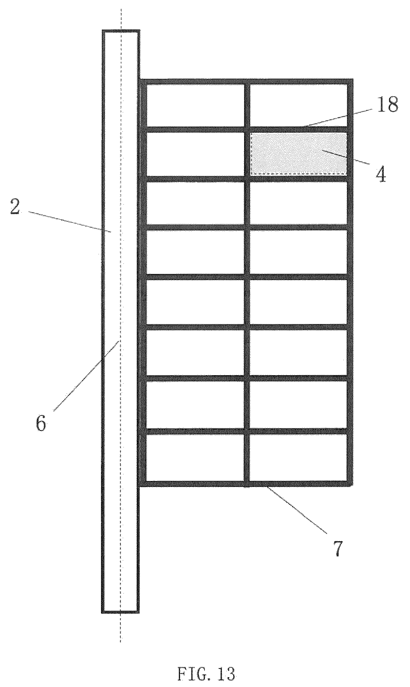

Additionally, when the wheel shaft 2 is disposed vertically, the multi-vane-type flow kinetic energy device of the present invention can also adopt the structure shown in Fig. 12 and Fig. 13 in addition to adopting the same structure as the one adopted when the wheel shaft 2 is horizontally disposed. As shown in Fig. 1 and Fig. 12, the difference only lies in that the window vanes 3 are hinge-joined to the window 4 at different positions, while other structures are completely the same. With continued reference to Fig. 12, the window vane 3 is rotatably connected on one side edge of the window 4 perpendicular to the axial direction of the wheel shaft, that is, as shown in Fig. 13, when the wheel shaft 2 is vertically disposed, the window vane 3 is hinge-joined to the window upper edge 18 of the window 4.

The working principle and the working process of the multi-vane-type flow kinetic energy device of the present invention is briefly explained as follows with reference to the accompany drawings by taking the wheel shaft disposed horizontally as an example:
When in use, the multi-vane-type flow kinetic energy device of the present invention is placed in the fluid, that is, disposed in the way as shown in Fig. 1.

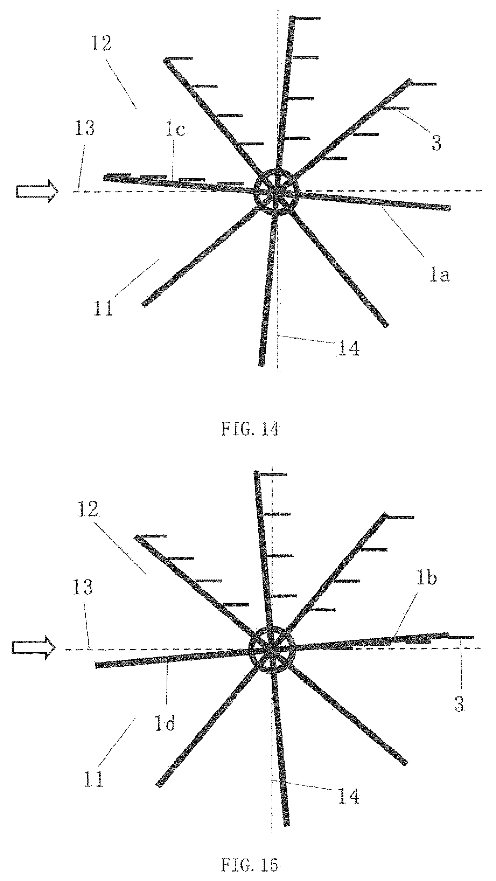

In the following, it will be explained by taking four wheel vanes 1 as an example. As shown in Fig. 14 and Fig. 15, now these four wheel vanes are respectively defined as a wheel vane 1a, a wheel vane lb, a wheel vane 1c and a wheel vane Id, and the arrow directions in Fig. 14 and Fig. 15 indicate the flow directions of the fluid.

As shown in Fig. 14, when the wheel vane la in the forward flow region 11 rotates to approach the turning surface 13, the protruding face of the window vane 3 slightly protruding outwardly still closes the window 4 under the propulsion effect of the fluid (it is the same if the window vane 3 doesn't protrude outwardly), and the wheel vane la continues to rotate and then crosses over the turning surface 13 to enter into the counter-flow region 12. And then as shown in Fig. 15, the recessing face of the window vane 3 of the wheel vane lb faces the flowing fluid, and naturally opens the window 4 under the propulsion effect of the fluid.

Basically, when the wheel vane 1a enters into the forward flow region 11 but hasn't crossed over the median plane 14, the subjected action force by the fluid propulsion is the most distinct. After the wheel vane la crosses over the median plane 14, the subjected action force by the fluid propulsion will decrease, and at this time, the fluid still flows along the previous flowing direction, and no other force acts on the window vane 3 except the gravitational force. If placed in water, the window vane 3 will be made of the material whose specific weight or effective specific weight is equivalent to that of water, so that the gravitational force subjected by the wheel vane la cancels the buoyancy of water. Therefore, after the wheel vane 1a crosses over the median plane 14, the window vane 3 still adheres to the window 4, after all, in practice, the fluid flowing direction may vary slightly. However, because the window vane 3 is hinge-joined to the window outer edge 5 so as to move freely, even though the wheel vane la hasn't crossed over the turning surface 13 to enter into the counter-flow region 12, the window vane 3 may slightly open due to the fluid action force varying according to the practical condition but won't contribute to the resistance to the rotation of the wheel vane la. If placed in the atmosphere, the window vane 3 will be made of lighter material. It won't contribute to the resistance to the rotation of the wheel vane la even if the window vanes 3 may open slightly before crossing over the turning surface 13 and entering into the counter-flow region 12.

As shown in Fig. 14 again, when the wheel vane 1c in the counter-flow region 12 rotates to approach the turning surface 13, the protruding face of the window vane 3 which slightly protrudes outwardly is about to close the window 4 under the propulsion effect of the fluid (it is the same if the window vane 3 doesn't protrude outwardly), the wheel vane 1c continues to rotate and then crosses over the turning surface 13 to enter into the forward flow region 11. And as shown in Fig. 15, the protruding face of the window vane 3 of the wheel vane 1d faces the flowing fluid, and closes the window 4 under the propulsion effect of the fluid.

Because of the fluid power effect, the fluid continuously passes through the multi-vane-type flow kinetic energy device of the present invention, so as to continuously drive the wheel vane 1 and then drive the wheel shaft 2 to rotate, endlessly, in order to generate kinetic energy, and the kinetic energy generated by the wheel shaft 2 can be output to generate electricity.

Energy losses of the multi-vane-type flow kinetic energy device of the present invention mainly include the following four parts: 1) the mechanical friction of the wheel shaft 2; 2) energy consumed to open the window vane 3 when the wheel vane 1 enters into the counter-flow region 12; 3) energy consumed to block the fluid by the actual area of the wheel vane frame 7 when the wheel vane 1 rotates in the counter-flow region 12; 4) energy consumed when the multi-vane-type flow kinetic energy device of the present invention rotates with its entire mass.

All of the four parts of energy losses are almost fixed, and normally, under the huge energy action force of the air current with strong wind or of the water current in the river or the sea, the energy generated by the fluid passing through the multi-vane-type flow kinetic energy device of the present invention and driving the wheel vane 1 to rotate is enormous far beyond the energy losses. After canceling the energy losses, there still remains a large amount of energy to drive the generator unit to generate electricity.

In the following, the energy generated by the multi-vane-type flow kinetic energy device of the present invention will be explained by preliminary estimation through mathematical calculation: assuming that the radial length of the wheel vane 1 is R, and assuming that the axial length of the wheel vane 1 is L, so the area of the wheel vane 1 is RL. Assuming that the time required by the fluid flowing over a distance of r along the direction of the turning surface 13 is t, then the fluid velocity v=r/t. Fluid density is ρ.

The preliminarily estimated Power P= (1/2) mv²/t= (1/2) ρ rRLv²/t= (1/2) ρ RLv³.

If placed in water current, water density ρ =1000Kg/m³.

Assuming that R is 1m, the length of the wheel vane L= 1000m, and water flow velocity v is 1 meter/second, then the Power P= (1/2)*1000*1*1000*1³=0.5MW. As for the same apparatus, if placed in water current with the water flow velocity v being 3 meter/second, then the Power P= (1/2)*1000*1*1000*3³=13.5MW.

If placed in strong wind, air density ρ =0.225 Kg/m³.

Assuming that R is 1 meter, and the length of the wheel vane L=100 meters, so when the wind velocity v is 10 meter/second, Power P= (1/2)*0.225*11*100*10³=11.2KW. As for the same apparatus, if placed in the strong wind with wind velocity v being 20 meter/second, Power P= (1/2)*0.225*1*100*20³=90KW.

### Comparison of the generating capacities:

The Three Gorges Dam hydropower station is equipped with thirty-two 700-thousand-kilowatt water turbine generator units, and additionally, there are two 50-thousand-kilowatt power supply sets, so the total installed capacity is 22.5 million kilowatts, that is, 22500 million watts. The middle reaches of the Yangtze River is one thousand kilometers long, and the average flowing velocity is 1 meter/second. So tens of thousands of multi-vane-type flow kinetic energy device, with the radial length of the wheel vane being 1 meter and the axial length being 1000 meters, can be employed in the river. In this way, the electricity generating capacity can exceed the electricity generating capacity of the Three Gorges Dam hydropower station. The water flowing velocity of the upper reaches of the Yangtze River is up to 3 meter/second, and for the same apparatus, the electricity generating capacity can even be increased by tens of times. In fact, the total annual average amount of water resources in the Yangtze River Basin is 996 billion cubic meters, and the theoretical hydropower reserves of the whole Basin is about 0.28 billion kilowatts, so the amount that can be developed is about 0.26 billion kilowatts, which is about 11 times of the electricity generating capacity of the Three Gorges Dam hydropower station, and if half of the energy is to convert into electricity, there will be 5 times of the electricity generating capacity of the Three Gorges Dam hydropower station.

Additionally, the potential energy stored in the ocean current is much huger. The theoretical average power of the current in China's coastal seas is 0.14 billion kilowatts. The Gulf Stream System in the Atlantic Ocean along the coast of The United States reaches 74 ∼ 93 million cubic meters / sec, exceeding the total of all rivers on the land by 80 times. If compared with the rivers in China, it is about 2600 times of the flow amount of the Yangtze River, or 57000 times of that of the Yellow River. Researchers from the Woods Hole Oceanographic Institution pointed out that, the energy brought by the Gulf Stream System, due to wind, the Earth's rotation and the heat heading toward the Arctic, is equivalent to 2000 times the electricity generating capacity of The United States of America.

Kinetic energy resources in rivers and seas in the world are rich. If it is considered that the multi-vane-type flow kinetic energy device of the present invention is appropriately employed in the rivers and seas in the whole world, then it is sufficient for the electricity generating capacity to replace all existing thermal power generation and nuclear power generation facilities. It will greatly reduce harm done to mankind because of no more waste gas discharged by thermal power generation. At the same time, it will greatly reduce the danger of nuclear radiation leak.

The embodiments above are only exemplary embodiments of the present invention but are not used to limit the present invention. The protection scope of the invention is defined by the claims. A person skilled in the art can make various modifications or equivalent substitutes to the present invention within the spirit and protection scope of the present invention, and such modifications or equivalent substitutes should be construed to fall into the protection scope of the present invention.

## Claims

1. A multi-vane-type flow kinetic energy device, placed in the atmosphere with an air current or in a body of water with a water current, **characterized by** comprising:
a wheel shaft;
multiple wheel vanes, fixed on the wheel shaft along an axial direction of the wheel shaft, the multiple wheel vanes being uniformly distributed on the wheel shaft and in a radiating arrangement, and the wheel vanes driving the wheel shaft to rotate unidirectionally under the effect of fluid power of the water current or the air current; wherein
the wheel vane comprises a wheel vane frame and multiple windows formed in the wheel vane frame, and window vanes are provided on the windows to cover the windows in a forward flow region and to automatically open the windows in a counter-flow region, and all of the window vanes are placed on the same side of the wheel vanes.

2. The multi-vane-type flow kinetic energy device according to claim 1, **characterized in that**, the window is formed by crossing transverse rod-shape bodies and longitudinal rod-shape bodies perpendicular to each other, wherein the transverse rod-shape body is parallel to the wheel shaft, and spaces of two adjacent transverse rod-shape bodies are equal, while spaces of two adjacent longitudinal rod-shape bodies are equal.

3. The multi-vane-type flow kinetic energy device according to claim 2, **characterized in that**, when the wheel shaft is disposed horizontally in use, the window vane is rotatably connected on the outer edge of the window parallel to the wheel shaft, and when the wheel shaft is disposed vertically in use, the window vane is rotatably connected on the outer edge of the window parallel to the wheel shaft or the window vane is rotatably connected on the upper edge of the window perpendicular to wheel shaft.

4. The multi-vane-type flow kinetic energy device according to claim 3, **characterized in that**, the window vane is hinge-joined to the outer edge or the upper edge of the window by a hinge.

5. The multi-vane-type flow kinetic energy device according to claim 3, **characterized in that**, a mortise is provided on the outer edge or the upper edge of the window, while a tenon, which is protruding and used for inserting into the mortise to rotatably connect the window vane with the window, is provided on the window vane.

6. The multi-vane-type flow kinetic energy device according to claim 3, **characterized in that**, a shaft lever is provided on the outer edge or the upper edge of the window, and a window vane hole into which the shaft lever penetrates is provided on the window vane, so that the window vane is rotatably connected on the window.

7. The multi-vane-type flow kinetic energy device according to claim 1, **characterized in that**, the area of the window vane is larger than the area of the corresponding window, resulting **in that** it is sufficient for the window vane to fully cover the corresponding window, and the adjacent window vanes do not overlap each other.

8. The multi-vane-type flow kinetic energy device according to claim 1, **characterized in that**, the area of the window vane is smaller than or equal to the area of the corresponding window, and a stopping bar is provided on the edge of the window, which is used to make the window vane always stay at the same side of the window without rotating to the other side of the window.

9. The multi-vane-type flow kinetic energy device according to claim 1, **characterized in that**, one face of the window vane recesses inwardly while the other face protrudes outwardly, and the face recessing inwardly adheres to the wheel vane frame, while the face protruding outwardly faces away from the wheel vane frame.
